# EUROPÄISCHE PATENTSCHRIFT

(11) **EP 1 668 236 B1**
(45) Veröffentlichungstag und Bekanntmachung des Hinweises auf die Patenterteilung: **05.01.2011**
(21) Anmeldenummer: 04765030.4
(22) Anmeldetag: 10.09.2004
(51) Int. Cl.: F02K 9/64

(54) **BRENNKAMMER MIT KÜHLEINRICHTUNG UND VERFAHREN ZUR HERSTELLUNG DER BRENNKAMMER**
COMBUSTION CHAMBER COMPRISING A COOLING UNIT AND METHOD FOR PRODUCING SAID COMBUSTION CHAMBER
CHAMBRE DE COMBUSTION COMPRENANT UN DISPOSITIF DE REFROIDISSEMENT, ET PROCEDE DE PRODUCTION DE CETTE CHAMBRE DE COMBUSTION

(30) Priorität: 16.09.2003 DE 10343049
(43) Veröffentlichungstag der Anmeldung: 14.06.2006
(73) Patentinhaber: Astrium GmbH, 82024 Taufkirchen (DE)
(72) Erfinder: FRÖHLICH, Anton, 83620 Feldkirchen (DE)
(74) Vertreter: Hummel, Adam
(86) Internationale Anmeldenummer: PCT/EP2004/010097
(87) Internationale Veröffentlichungsnummer: WO 2005/035965

(56) Entgegenhaltungen:
- WO-A-02/055864
- DE-A- 4 137 638
- DE-A- 10 054 333
- DE-B- 1 197 689
- GB-A- 1 410 014

## Beschreibung

Die vorliegende Anmeldung betrifft eine Brennkammer für ein Raketentriebwerk zum Ausstoß einer heißen Gasströmung, wobei die Brennkammer Kühlkanäle zur Durchströmung mit einem Kühlmedium aufweist. Die Erfindung betrifft weiterhin ein Verfahren zum Herstellen einer derartigen Brennkammer.

Die an eine Brennkammerwand angrenzenden Kühlkanäle haben üblicherweise das Ziel, die Brennkammerwand gegenüber den heißen Verbrennungsgasen so kühl zu halten, dass eine ausreichende Lebensdauer der Brennkammer erzielt wird. Zur Bewältigung dieses Ziels sind aus dem Stand der Technik verschiedene Lösungen bekannt.

Die DE 100 54 333 A1 offenbart eine Brennkammer mit einer Kühleinrichtung sowie einer an die Kühleinrichtung zum Inneren der Brennkammer hin angrenzende innere Brennkammerwand für ein regenerativ gekühltes Triebwerk. Dabei weist die innere Brennkammerwand Vertiefungen auf, die derart ausgebildet sind, dass eine stabile Gasströmung, die im Betrieb der Brennkammer im Bereich der inneren Brennkammerwand ausgebildet wird, im Bereich der Vertiefungen strömungstechnisch destabilisiert wird. Diesem Vorgehen liegt die Überlegung zugrunde, dass die Gasströmung in der Brennkammer im Bereich der Brennkammerwand für den Normalfall einer glatten Brennkammerwand eine Grenzschicht ausbildet, die eine gewisse thermische Isolationswirkung entgegen dem Wärmeeintrag von der heißen Gasströmung in die Brennkammerwand entfaltet. Mit der dortigen Anordnung wird nun versucht, die Ausbildung dieser thermisch isolierenden Grenzschicht zu zerstören, um dadurch den Wärmeeintrag in die Brennkammerwand und damit die Kühleinrichtung zu erhöhen. Die

Herstellung von Vertiefungen im Inneren der Brennkammer ist herstellungstechnisch allerdings aufwendig und teuer.

Aus der DE 101 56 124 A1 ist weiterhin ein Raketentriebwerk mit einer Brennkammer und einer Expansionsdüse bekannt, wobei die Brennkammer und/oder die Expansionsdüse Kühlkanäle einer Flüssigkeitskühlung aufweisen. Zur Verringerung einer Temperaturschichtung (Stratifizierung) in dem Kühlmedium ist vorgesehen, dass zumindest ein Teil der Kühlkanäle zumindest abschnittsweise eine mäanderförmige Geometrie aufweist. Durch eine Krümmung des Kühlkanals werden durch die daraus resultierende Strömungsumlenkung, abhängig vom lokalen Krümmungsradius, Zentrifugalkräfte und Corioliskräfte induziert, die sich in der Ausbildung eines im Strömungsquerschnitt liegenden Wirbelpaares bemerkbar machen. Dieses Wirbelpaar sorgt für einen konvektiven Strömungsaustausch innerhalb des Querschnitts, wodurch die Stratifizierung verringert wird. Die Herstellung mäanderförmiger Kühlkanäle erfordert jedoch zusätzlichen Aufwand und erhöht die Kosten.

Schließlich ist es aus der WO 02/055864 A1 bekannt, die Kühlkanäle mit einer das Kühlmedium führenden Fläche zu versehen. Die Führungsfläche erzwingt, dass das Kühlmittel beim Durchfließen des Kühlkanals in eine Rotation versetzt wird, so dass eine Stratifikation vermieden wird. Zur Ausbildung der Führungsfläche ist vorgesehen, eine Metallfolie in die gewünschte Form mit der Führungsfläche zu bringen und dieses Zwischenprodukt als Kühlkanäle auszubilden und an eine Brennkammerwand anzubringen. Die Führungsfläche wird dabei durch herausragende Rippen, die in einem Winkel zur Achse des Kühlkanals stehen, gebildet. Statt der Rippen wird auch vorgeschlagen, die Oberfläche mit Kerben oder Nuten zu versehen. Auch diese erstrecken sich in einem Winkel zur Achse des Kühlkanals, um die gewünschte Rotation des Kühlmediums zu erzwingen. Weiterhin ist aus der DE 41 37 638 A1 ein Bauteil mit einer vor thermischer Belastung zu schützenden Wand mit kühlmittelführenden Kühlkanälen aus einem temperaturfesten Werkstoff auf der einer Wärmequelle zugewandten Seite der Wand bekannt, wobei der Kühlkanalwerkstoff auf der zur Wand angrenzenden Fläche eine Wärmeleitschicht aufweist und zwischen benachbarten Kühlkanälen bei Bedarf ebenfalls eine wärmeleitende Schicht trägt. Dieses Bauteil ist vorteilhaft für Schubdüsen von Hyperschallantrieben oder für Raketen- oder Staubrennkammem oder Raketendüsen sowie für thermisch hochbelastete Zellstrukturen von Hyperschallflugzeugen anwendbar.

Um einen verbesserten Wärmeübergang von der Brennkammer in das Kühlmedium einer Kühleinrichtung zu bekommen, wird somit durch konstruktive Maßnahmen versucht, eine Temperaturschichtung im Bereich der Brennkammerwand - entweder in der Brennkammer selbst oder in der Kühleinrichtung - zu vermeiden. Die aus dem Stand der Technik vorgeschlagenen Maßnahmen sind jedoch hinsichtlich ihrer Handhabbarkeit und der Herstellung nachteilig.

Es ist daher Aufgabe der vorliegenden Erfindung, eine Brennkammer für ein Raketentriebwerk sowie ein Verfahren zu dessen Herstellung bereitzustellen, das auf einfache Weise einen erhöhten Wärmeübergang in eine Kühleinrichtung ermöglicht, wobei die Fertigung der Brennkammer einen geringeren Aufwand erfordert als die eingangs geschilderten bekannten Lösungen.

Diese Aufgabe wird mit einer Brennkammer mit den Merkmalen des Patentanspruches 1 und mit einem Verfahren mit den Merkmalen des Patentanspruches 11 gelöst. Vorteilhafte Ausgestaltungen ergeben sich aus den jeweils abhängigen Ansprüchen.

Es ist dabei eine Brennkammer für ein Raketentriebwerk zum Ausstoß einer heißen Gasströmung vorgesehen, wobei die Brennkammer Kühlkanäle zur Durchströmung mit einem Kühlmedium aufweist Erfindungsgemäß weisen die Kühlkanäle einen im wesentlichen rechteckigen Querschnitt auf, wobei zumindest ein Teil der Kühlkanäle Vertiefungen, die vorzugsweise an den Stegwänden angeordnet sind, aufweist, durch die eine Stratifizierung des Kühlmediums in den Kühlkanälen vermieden wird. Dadurch, dass die Vertiefungen quer zur Strömungsrichtung des Kühlmediums gelegen sind, ergibt sich eine zuverlässige Destabilisierung der Temperaturschichtung.

Das Vorsehen von Kühlkanälen mit einem im wesentlichen rechteckigen Querschnitt ermöglicht eine besonders einfache Fertigung, da diese von einer Außenseite der Brennkammer her in eine Brennkammerwand eingebracht werden können. Das Einbringen der Kühlkanäle kann beispielsweise mittels eines Fräswerkzeuges erfolgen, wodurch aufwendige Falz- oder Formungsvorgänge entfallen. Im günstigsten Fall entspricht die Breite eines Kühlkanals der Breite eines Fräswerkzeuges, so dass mit einem einzigen Bearbeitungsschritt die endgültige Form der Kühlkanäle erreicht werden kann. Das Einbringen der Vertiefungen in zumindest einen Teil der Kühlkanäle gestaltet sich ebenfalls besonders einfach, da alle Arbeiten im gleichen Bearbeitungszentrum bei gleicher Einspannung durchgeführt werden kann.

Die Vertiefungen können gemäß eines bevorzugten Verfahrens vor dem Ausbilden der Kühlkanäle in der Brennkammerwand entlang einer jeweiligen Längsachse der Kühlkanäle mittels Bohrungen oder Ausfräsungen im Bereich der Längsachse eingebracht werden. Das Einbringen der Bohrungen oder Ausfräsungen im Bereich der Längsachse erfolgt dabei vorzugsweise vor dem Ausbilden der eigentlichen Kühlkanäle.

Das erfindungsgemäße Verfahren zeichnet sich gegenüber den aus dem Stand der Technik bekannten Vorgehensweisen dadurch aus, dass die im Bereich eines Kühlkanals vorgesehenen Störstellen nicht nach der Herstellung des Kühlkanals sondern bereits vor dessen Herstellung erzeugt werden. Hierdurch ergeben sich wesentliche fertigungstechnische Vorteile, da die Herstellung einer erfindungsgemäßen Brennkammer mit nur wenigen Werkzeugen in kurzer Zeit möglich ist.

Die Vertiefungen sind in einer Ausgestaltung zweckmäßigerweise symmetrisch bezüglich der Längsachse in den gegenüberliegenden Stegwänden gebildet. Das bedeutet, dass die Bohrachse eines Bohrers beim Bohren auf der Längsachse des Kühlkanales angeordnet wird. Der Durchmesser des Bohrers wird dabei größer als die Breite des Kühlkanals gewählt. Mit lediglich einer Bohrung lassen sich damit Vertiefungen jeweils auf den gegenüberliegenden Stegwänden bezüglich der Längsachse ausbilden. Hierdurch ergibt sich eine besonders schnelle Fertigung. In einer anderen Ausgestaltung sind die Vertiefungen auf den gegenüberliegenden Stegwänden versetzt bezüglich der Längsachse angeordnet. Bei dieser Variante wird die Bohrachse eines Bohrers beim Bohren seitlich gegenüber der Längsachse des Kühlkanals um einen Versetzungsabstand versetzt angeordnet. Wird gleichzeitig der Radius des Bohrers kleiner als die Distanz einer Stegwand zu der Längsachse plus dem Versetzungsabstand gewählt, so wird hierdurch eine Anordnung ermöglicht, bei der der Kühlkanal an einer Stegwand eine Vertiefung, symmetrisch bezüglich der Längsachse auf der gegenüberliegenden Stegwand jedoch keine Vertiefung aufweist. So ist es beispielsweise möglich in einem Längenabschnitt des Kühlkanales mehrere Vertiefungen zunächst an einer Stegwand vorzusehen und in einem sich daran anschließenden Abschnitt Vertiefungen auf der gegenüberliegenden Stegwand vorzusehen.

Weiterhin ist es zweckmäßig, wenn der Querschnitt der Vertiefungen in Form eines Kreissegments ausgebildet ist, wobei der Radius des Kreissegments größer oder gleich der Tiefe der Vertiefungen ist. Hierdurch wird die Kerbwirkung der Vertiefungen herabgesetzt, was zu einer Erhöhung der Lebensdauer der Brennkammer führt. Das Kreissegment kann nach dieser Ausgestaltung niemals größer als ein Halbkreis werden. Ein Querschnitt in Form eines Kreissegments lässt sich auf einfache Weise mit einem Bohrer erstellen; ein Querschnitt in Form eines ellipsoiden Segments würde einen Fräsvorgang bedingen.

Durch eine Variation der Dichte der Anzahl der Vertiefungen - also insbesondere der Anzahl der Vertiefungen pro Längenabschnitt - kann die Störwirkung der Vertiefungen auf die Grenzschicht lokal variiert werden und so der lokale Wärmeübergang für jeden Bereich der Brennkammerwand an die jeweiligen Gegebenheiten und Erfordernisse angepasst werden kann. Es wird also bevorzugt vorgesehen, das die Kühlkanäle Abschnitte mit unterschiedlicher Dichte der Anzahl von Vertiefungen aufweisen. Insbesondere kann dabei eine Brennkammer betrachtet werden, die an einem ersten Ende einen Einspritzkopf aufweist und an einem dem ersten Ende gegenüberliegende Ende einen Brennkammerhals als Auslassöffnung für die Gasströmung besitzt. Bei solchen Brennkammern treten im Bereich des Brennkammerhalses besonders hohe Werte für den Wärmefluss auf. Um die Wandtemperaturen abzusenken, kann im Bereich stromaufwärts des Brennkammerhalses eine höhere Dichte der Anzahl der Vertiefungen vorgesehen werden. Damit kann eine Stratifizierung des Kühlmittels bereits vor Erreichen des Düsenhalses vermieden werden. Andererseits weist eine vorstehend beschriebene Brennkammer im Bereich des Einspritzkopfes einen relativ geringen Wärmefluss auf, da die Gasströmung in diesem Bereich eine geringere Geschwindigkeit und Temperatur besitzt als weiter stromabwärts. Wird nun in diesem Bereich der Brennkammerwand eine geringere Dichte der Anzahl der Vertiefungen vorgesehen, so kann der Wärmeübergang angepasst werden, so dass die lokale Wandtemperatur an dieser Stelle an die lokalen Temperaturen in weiter stromabwärts gelegenen Bereichen der Brennkammerwand angeglichen werden kann. Man erzielt damit eine gleichmäßigere Wandtemperatur über die gesamte Länge der Brennkammer. Die Erhöhung der Dichte der Anzahl der Vertiefungen in einzelnen Bereichen der Brennkammerwand, d. h. in jeweiligen Kühlkanälen, kann gleich oder unterschiedlich sein.

Dabei ist es auch ohne weiteres möglich, dass die Vertiefungen entlang der Längsachse eines jeweiligen Kühlkanals unterschiedliche aufweisen. Die durch eine Bohrung jeweils entstehenden Kreissegmente können daher einerseits unterschiedlichen Radien aufweisen und andererseits unterschiedlich tief in eine jeweilige Stegwand hineinragen.

Die Tiefe der Bohrung oder Ausfräsung in radialer Richtung wird vorzugsweise kleiner oder gleich der Höhe der Stegwände des Kühlkanals gewählt. Es ist ohne weiteres denkbar, dass die Tiefe einer jeweiligen Bohrung oder Ausfräsung unterschiedlich gewählt wird.

Anhand der nachfolgenden Figuren wird die Erfindung, deren Vorteile und weitere Zweckmäßigkeiten näher erläutert. Es zeigen:
- Figur 1: eine Brennkammer für ein Raketentriebwerk im Querschnitt,
- Figur 2: einen Schnitt durch einen Teilbereich einer Brennkammer, aus der die Anordnung der Vertiefungen relativ zu den Kühlkanälen ersichtlich wird und
- Figuren 3 bis 5: verschiedene Ausführungsbeispiele, in der die Anordnung der Vertiefungen entlang eines Kühlkanals ersichtlich wird, entlang der Linie A-A aus Figur 2.

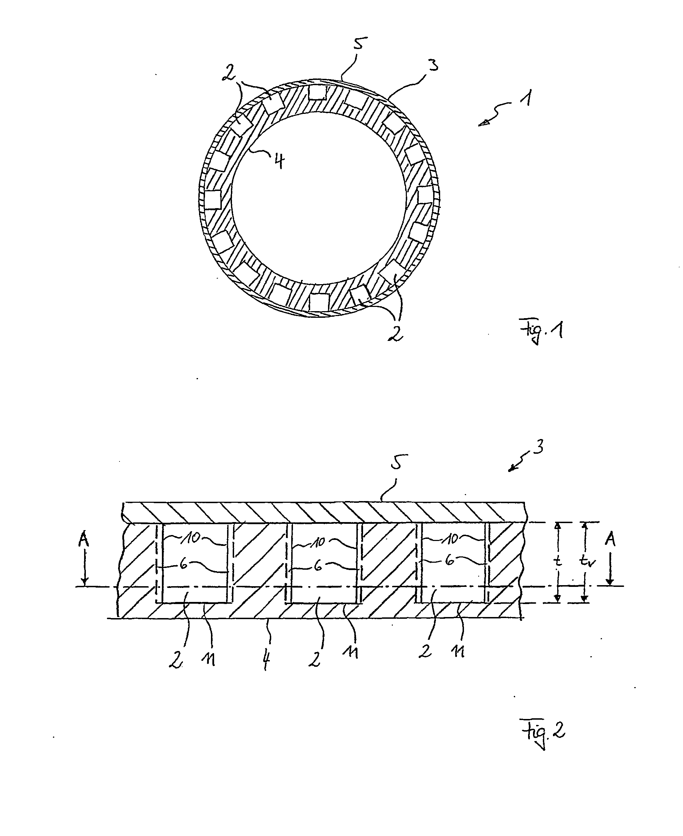

Figur 1 zeigt eine Brennkammer 1 in einer Querschnittsdarstellung. Eine Brennkammerwand 3 ist mit einer Kühleinrichtung in Form von axial nebeneinander verlaufenden Kühlkanälen 2, die jeweils einen rechteckigen Querschnitt aufweisen, versehen. Die Brennkammerwand 3 weist eine innere Schicht 4 und eine äußere Schicht 5 auf. Die Kühlkanäle 2 werden von der Außenseite her, z. B. durch Fräsen, in die Brennkammerwand 3 eingebracht. Die äußere Schicht 5 der Brennkammerwand wird in einem nachfolgenden Verarbeitungsschritt, nach dem Ausgießen der Kühlkanäle 2 mit einem Wachs, durch eine Galvanikschicht gebildet. Anschließend wird das Wachs wieder entfernt. Die Breite eines Kühlkanals beträgt beispielsweise zwischen 0,7 und 1,3 mm.

Zur Vermeidung einer Temperaturschichtung des in die Kühlkanäle eingebrachten Kühlmediums sind erfindungsgemäß Störstellen in Form von Vertiefungen in den Stegwänden der Kühlkanäle vorgesehen. Wie aus der Querschnittsdarstellung der Figur 2 besser zu ersehen ist, sind die Vertiefungen lediglich im Bereich jeweiliger Stegwände 10 eingebracht. Zwar wäre es ohne weiteres auch möglich, Störstellen am Boden eines jeweiligen Kühlkanales 2 vorzusehen, hierdurch könnten sich jedoch Lebensdauerprobleme der Brennkammer aufgrund frühzeitiger Risse ergeben. Es wird deshalb eine Anordnung bevorzugt, in die lediglich Störstellen in den Stegwänden jeweiliger Kühlkanäle 2 eingebracht sind, während der Boden 11 glatt bleibt.

In Figur 2 entspricht die radiale Tiefe der Vertiefung tᵥ beispielhaft der Tiefe des Kühlkanals t. Denkbar wäre natürlich auch, die Tiefe der Bohrung tᵥ geringer als die Tiefe des Kühlkanals t auszuführen.

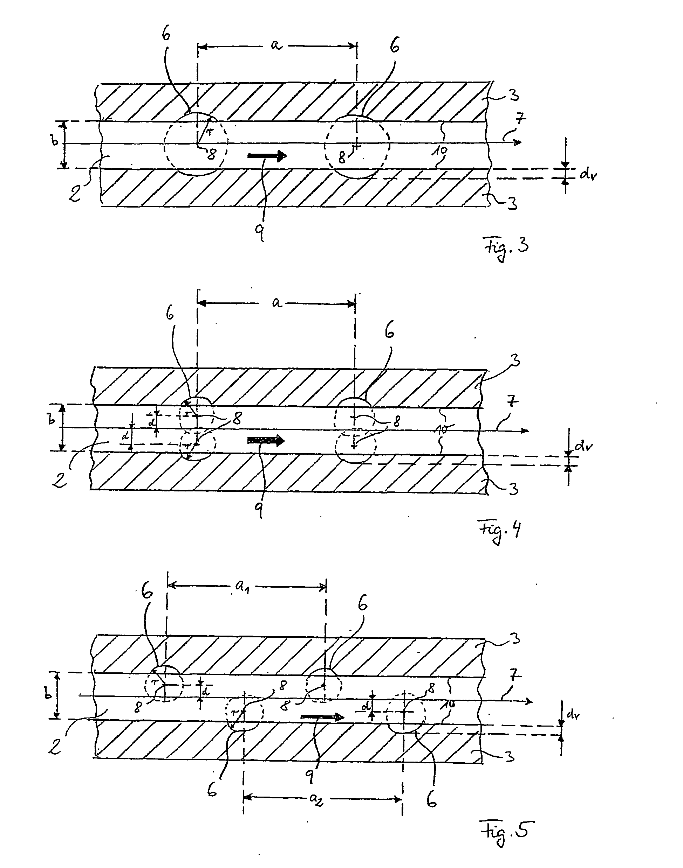

Aus den Figuren 3 bis 5, die eine Draufsicht auf einen jeweiligen Kühlkanal entlang der Linie A-A aus Figur 2 und darin eingebrachte Vertiefungen zeigt, wird die Erfindung besser verständlich. Die Vertiefungen 6, die in den Stegwänden 10 jeweils die Querschnittsform eines Kreissegmentes aufweisen, sind durch eine Bohrung an jeweiligen Stellen des Kühlkanals in der Brennkammerwand 3 eingebracht. Jeder Kühlkanal 2 weist eine Längsachse 7 auf, die im wesentlichen symmetrisch bezüglich der Stegwände 10 durch den Kühlkanal verläuft. Die Strömungsrichtung des durch den Kühlkanal 2 fließenden Kühlmediums ist durch den mit dem Bezugszeichen 9 versehenen Pfeil gegeben.

In dem Ausführungsbeispiel der Figur 3 weist die Bohrung einen Durchmesser 2r auf, wobei der Durchmesser größer als die Breite b des Kühlkanals 2 ist. Zwei Bohrungen 6 sind dabei um den Abstand a voneinander beabstandet. Der Abstand a braucht entlang der Längsachse 7 nicht gleichmäßig sein. Vielmehr ist es vorteilhaft, den Abstand a in Bereichen mit einem hohen Wärmestrom, wie z. B. dem Brennkammerhals, zu verringern und den Abstand a in Bereichen, in denen der Wärmestrom geringer ist, wie z. B. im Bereich des Einspritzkopfes, zu vergrößern.

Die axiale Tiefe einer jeweiligen Vertiefung dᵥ ist bei den in Figur 3 gezeigten Kreissegmenten jeweils identisch. Die Tiefe der Vertiefung dᵥ kann sich jedoch entlang der Längsachse 7 verändern. Um die Kerbwirkung der Vertiefungen nicht zu groß werden zu lassen, sollte das Kreissegment einer Vertiefung einen Halbkreis jedoch nicht überschreiten. Die Tiefe dᵥ ist in Abhängigkeit von dem gewählten Kühlmedium und der Strömungsgeschwindigkeit zu wählen. Axiale Tiefen im Bereich von 0,1 bis 0,2 mm haben sich als günstig erwiesen, um den Wärmeübergang bis zu 50 % zu verbessern.

Zum Einbringen der vier Kreissegmente, d. h. der vier Vertiefungen in die Stegwände 10 des Kühlkanals aus Figur 3 sind lediglich zwei Bohrungen notwendig. Dem gegenüber müssen in dem Ausführungsbeispiel der Figur 4 insgesamt vier Bohrungen vorgenommen werden. Während die Bohrachse 8 einer jeweiligen Bohrung bei dem Beispiel der Figur 3 auf der Längsachse 7 gelegen ist, ist eine jeweilige Bohrachse 8 in Figur 4 um einen Versetzungsabstand d gegenüber der Längsachse 7 versetzt angeordnet. Die Radien dieser Bohrungen sind gegenüber dem vorherigen Ausführungsbeispiel geringer, so dass sich eine größere Kerbwirkung ergibt. Hinsichtlich der Tiefe der Vertiefung dᵥ ist es wie in dem obigen Ausführungsbeispiel ausreichend, wenn diese im Bereich zwischen 0,1 und 0,2 mm gelegen ist.

Während die Vertiefungen bezüglich der Längsachse 7 in den beiden beschriebenen Ausführungsbeispielen symmetrisch angeordnet sind, zeigt die Darstellung der Figur 5, dass die Vertiefungen bezüglich der Längsachse auch versetzt angeordnet sein können. Während die in der oberen Stegwand 10 eingebrachten Bohrungen in einem Abstand a₁ voneinander beabstandet sind, weisen die der unteren Stegwand 10 zugeordneten Bohrungen 6 einen Abstand a₂ auf. Die Abstände a₁ und a₂ können gleich sein, müssen es jedoch nicht. Auch für dieses Ausführungsbeispiel ist es kennzeichnend, dass die Bohrachsen 8 zu der Längsachse 7 beabstandet sind. Der Radius einer jeweiligen Bohrung ist dabei so zu bemessen, dass dieser geringer ist als der Abstand zwischen der Längsachse 7 und einer Stegwand plus dem Versetzungsabstand d, welcher durch die Distanz zwischen Bohrachse 8 und der Längsachse 7 gebildet ist.

Eine besonders einfache Fertigung der erfindungsgemäßen Brennkammer ist deshalb möglich, weil die Bohrungen 6 vor dem eigentlichen Erstellen der Kühlkanäle der Brennkammerwand eingebracht werden. Zur Herstellung ist lediglich die Bereitstellung eines Bohr- und Fräswerkzeuges notwendig. Da keinerlei Falzvorgänge von Blechen vorgenommen werden müssen, können die Kühlkanäle eine geringe Breite und einen geringen jeweiligen Abstand zueinander aufweisen, wodurch durch sich die zur Wärmeübertragung zur Verfügung stehende Fläche vergrößert.

Der Abstand a, a₁ und a₂ der Vertiefungen voneinander kann den lokalen Anforderungen an die Stärke des Wärmeeintrages in die Brennkammerwand angepasst werden, d. h. über den Abstand a, a₁ und a₂ kann die lokale Dichte der Zahl der Vertiefungen eingestellt werden. In dem Beispiel nach Figur 3 beträgt der Abstand etwa 2 bis 5 mm, also etwa das zehn- bis fünfzigfache der Tiefe dᵥ. Die Dichte kann je nach Bedarf verringert oder erhöht werden, zwischen völlig glatten Bereichen bis zu einigen zehn Vertiefungen pro Zentimeter. Wie Eingangs bereits ausgeführt, kann es sich als günstig erweisen, im Bereich nahe des Einspritzkopfes sowie im Bereich stromaufwärts des Brennkammerhalses lokal eine niedrigere Dichte der Vertiefungen vorzusehen oder speziell ausschließlich in diesen Abschnitten Vertiefungen vorzusehen und ansonsten die Kühlkanäle glatt auszugestalten.

### Bezugszeichenliste

- 1: Brennkammer
- 2: Kühlkanal
- 3: Wand
- 4: innere Schicht
- 5: zweite/äußere Schicht
- 6: Vertiefung
- 7: Längsachse
- 8: Bohrachse / Mittelpunkt
- 9: Strömungsrichtung
- 10: Stegwand
- 11: Boden
- 12: Einspritzkopf
- 13: Brennkammerhals
- 14: Bohrachse

- b: Breite des Kühlkanals
- t: Tiefe des Kühlkanals
- r: Radius der Bohrung
- a: Abstand zweier Bohrungen
- a1,a2: Abstand zweier Bohrungen
- dᵥ: Tiefe der Vertiefung
- tv: Tiefe der Bohrung
- d: Versetzungsabstand

## Patentansprüche

1. Brennkammer (1) für ein Raketentriebwerk zum Ausstoß einer heißen Gasströmung, wobei die Brennkammer (1) eine Brennkammerwand (3) aufweist, innerhalb welcher Kühlkanäle (2) zur Durchströmung mit einem Kühlmedium angeordnet sind, wobei die Kühlkanäle (3) eine Längsachse (7), eine Tiefenrichtung (t) und einen im Wesentlichen rechteckigen Querschnitt besitzen (2) und zumindest ein Teil der Kühlkanäle (2) Vertiefungen (6) aufweist, durch die eine Stratifizierung des Kühlmediums in den Kühlkanälen (2) vermieden wird, und
die jeweils quer zur Strömungsrichtung und quer zur Längsachse (7) in Tiefenrichtung (t) der Kühlkanäle (2) angeordnet sind,
**dadurch gekennzeichnet, dass**
der Querschnitt der Vertiefungen (6) in Form eines Kreissegments ausgebildet ist, dessen Radius (r) größer oder gleich der Tiefe (tᵥ) der Vertiefungen (6) ist.

2. Brennkammer nach Anspruch 1,
**dadurch gekennzeichnet, dass**
die Brennkammerwand (3) eine erste Schicht (4) und eine zweite Schicht (5) aufweist.

3. Brennkammer nach Anspruch 2,
**dadurch gekennzeichnet, dass**
die erste Schicht eine einem Brennkammerinnenraum zugewandte innere Schicht (4) ist und die zweite Schicht eine äußere Schicht (5) der Brennkammerwand (3) ist und
die Kühlkanäle (2) in der der äußeren Schicht (5) zugewandten Seite der inneren Schicht (4) angeordnet sind.

4. Brennkammer nach Anspruch 3,
**dadurch gekennzeichnet, dass**
sich die Vertiefungen (6) von der der äußeren Schicht (5) zugewandten Seite der inneren Schicht (4) her in die innere Schicht (4) erstrecken.

5. Brennkammer nach Anspruch 1,
**dadurch gekennzeichnet, dass**
die Vertiefungen (6) an Stegwänden (10) der Kühlkanäle (2) vorgesehen sind.

6. Brennkammer nach Anspruch 1 oder 5,
**dadurch gekennzeichnet, dass**
die Vertiefungen (6) symmetrisch bezüglich der Längsachse (7) in den gegenüberliegenden Stegwänden (10) ausgebildet sind.

7. Brennkammer nach Anspruch 1 oder 5,
**dadurch gekennzeichnet, dass**
die Vertiefungen (6) auf den gegenüberliegenden Stegwänden (10) in Richtung der Längsachse (7) gegeneinander versetzt ausgebildet sind.

8. Brennkammer nach einem der Ansprüche 2 bis 7,
**dadurch gekennzeichnet, dass**
sich die Stegwände (10) eines Kühlkanals (2) von der ersten Schicht (4) zu der zweiten Schicht (5) erstrecken, wobei die Tiefe (tᵥ) der Vertiefungen (6) maximal der durch die Tiefe (t) eines Kühlkanals (2) bestimmten Höhe der Stegwände (10) entspricht.

9. Brennkammer nach einem der vorhergehenden Ansprüche,
**dadurch gekennzeichnet, dass**
die Kühlkanäle (2) entlang ihrer Längsachse (7) Bereiche mit unterschiedlicher Dichte der Anzahl von Vertiefungen (6) aufweist.

10. Brennkammer nach einem der vorhergehenden Ansprüche,
**dadurch gekennzeichnet, dass**
die Brennkammer (1) an einem ersten Ende einen Einspritzkopf (12) und an einem dem ersten Ende gegenüberliegenden Ende einen Brennkammerhals (13) als Auslassöffnung für die Gasströmung aufweist und stromaufwärts im Bereich des Brennkammerhalses (13) eine niedrigere Dichte der Anzahl der Vertiefungen (6) vorgesehen ist.

11. Verfahren zum Herstellen einer Brennkammer (1) nach einem der vorhergehenden Ansprüche, bei dem Kühlkanäle (2) mit einem im wesentlichen rechteckigen Querschnitt innerhalb der Brennkammerwand (3) ausgebildet werden,
**dadurch gekennzeichnet, dass**
vor dem Ausbilden der Kühlkanäle (2)
zum Anfertigen der Vertiefungen (6) in der Brennkammerwand (3) entlang einer jeweiligen Längsachse (7) und im Bereich der Längsachse (7) quer zur Strömungsrichtung und quer zur Längsachse (7) verlaufende Bohrungen oder Ausfräsungen eingebracht werden.

12. Verfahren nach Anspruch 11,
**dadurch gekennzeichnet, dass**
die Brennkammerwand (3) mit einer ersten (4) und einer zweiten Schicht (5) ausgebildet wird, wobei zunächst die erste Schicht (4) hergestellt wird und die Kühlkanäle (2) und die Vertiefungen (6) in der ersten Schicht (4) angebracht werden und anschließend die zweite Schicht (5) hergestellt wird.

13. Verfahren nach Anspruch 11,
**dadurch gekennzeichnet, dass**
das Ausbilden der Kühlkanäle (2) durch ein Fräswerkzeug entlang der jeweiligen Längsachse (7) erfolgt, wobei die dabei gebildeten, gegenüberliegenden Stegwände (10) entlang des Längsachse (7) eine gleiche Distanz zu dieser aufweisen.

14. Verfahren nach Anspruch 11,
**dadurch gekennzeichnet, dass**
zum Anfertigen einer Vertiefung (6) die Bohrachse (14) eines Bohrers oder Fräsers beim Bohren auf der Längsachse (7) des Kühlkanals (2) angeordnet wird.

15. Verfahren nach einem der Ansprüche 11 bis 14,
**dadurch gekennzeichnet, dass**
der Durchmesser (2r) des Bohrers oder Fräsers größer als die Breite (b) des Kühlkanals (2) gewählt wird.

16. Verfahren nach Anspruch 11 oder 13,
**dadurch gekennzeichnet, dass**
die Bohrachse eines Bohrers oder Fräsers beim Bohren einer Vertiefung (6) seitlich gegenüber der Längsachse (7) um einen Versetzungsabstand (d) versetzt angeordnet wird.

17. Verfahren nach Anspruch 16,
**dadurch gekennzeichnet, dass**
der Radius (r) des Bohrers oder Fräsers kleiner als die Distanz einer Stegwand (10) zu der Längsachse (7) plus dem Versetzungsabstand (d) gewählt wird.

18. Verfahren nach Anspruch 16 oder 17,
**dadurch gekennzeichnet, dass**
die Bohrachse (14) des Bohrers oder Fräsers entlang der Längsachse (7) nach einer ersten Anzahl von Bohrungen auf der einen Seite der Längsachse (7) auf die andere Seite der Längsachse (7) wechselt, um eine zweite Anzahl von Bohrungen durchzuführen.

19. Verfahren nach einem der Ansprüche 11 bis 18,
**dadurch gekennzeichnet, dass**
die Bohrungen entlang der Längsachse (7) mit unterschiedlichen Bohr- oder Fräserdurchmessem durchgeführt werden.

20. Verfahren nach einem der Ansprüche 11 bis 19,
**dadurch gekennzeichnet, dass**
die Tiefe (tv) der Bohrung kleiner oder gleich der durch die Tiefe (t) eines Kühlkanals (2) bestimmten Höhe der Stegwände (10) gewählt wird.

21. Verfahren nach einem der Ansprüche 11 bis 20,
**dadurch gekennzeichnet, dass**
die Anzahl der Bohrungen stromaufwärts entlang einer jeweiligen Längsachse (7) pro Längeneinheit erhöht wird.

## Claims

1. Combustion chamber (1) for a rocket motor for injection of a hot gas flow, wherein the combustion chamber (1) has a combustion chamber wall (3), within which cooling channels (2) for a cooling medium to flow through are arranged, wherein the cooling channels (2) have a longitudinal axis (7), a depth direction (t) and a substantially rectangular cross section, and at least some of the cooling channels (2) have depressions (6) which prevent stratification of the cooling medium in the cooling channels (2), and
which are each arranged transversely with respect to the flow direction and transversely with respect to the longitudinal axis (7) in the depth direction (t) of the cooling channels (2),
**characterized in that**
the cross section of the depressions (6) is in the form of a circle segment whose radius (r) is greater than or equal to the depth (tᵥ) of the depressions (6).

2. Combustion chamber according to Claim 1,
**characterized in that**
the combustion chamber wall (3) has a first layer (4) and a second layer (5).

3. Combustion chamber according to Claim 2,
**characterized in that**
the first layer is an inner layer (4), which faces a combustion chamber interior, and the second layer is an outer layer (5) of the combustion chamber wall (3), and the cooling channels (2) are arranged **in that** side of the inner layer (4) which faces the outer layer (5).

4. Combustion chamber according to Claim 3,
**characterized in that**
the depressions (6) extend into the inner layer (4) from that side of the inner layer (4) which faces the outer layer (5).

5. Combustion chamber according to Claim 1,
**characterized in that**
the depressions (6) are provided on web walls (10) of the cooling channels (2).

6. Combustion chamber according to Claim 1 or 5,
**characterized in that**
the depressions (6) are formed symmetrically with respect to the longitudinal axis (7) in the opposite web walls (10).

7. Combustion chamber according to Claim 1 or 5,
**characterized in that**
the depressions (6) are formed on the opposite web walls (10), offset with respect to one another in the direction of the longitudinal axis (7).

8. Combustion chamber according to one of Claims 2 to 7,
**characterized in that**
the web walls (10) of a cooling channel (2) extend from the first layer (4) to the second layer (5), wherein the depth (tᵥ) of the depressions (6) corresponds at most to the height of the web walls (10), which is governed by the depth (t) of a cooling channel (2).

9. Combustion chamber according to one of the preceding claims,
**characterized in that**
the cooling channels (2) have areas with a different density of the number of depressions (6) along their longitudinal axis (7).

10. Combustion chamber according to one of the preceding claims,
**characterized in that**
at a first end, the combustion chamber (1) has an injection head (12), and, at an end opposite the first end, has a combustion chamber neck (13) as an outlet opening for the gas flow, and a lower density of the number of depressions (6) is provided upstream in the area of the combustion chamber neck (13).

11. Method for production of a combustion chamber (1) according to one of the preceding claims, in which cooling channels (2) are formed with a substantially rectangular cross section within the combustion chamber wall (3),
**characterized in that**
before the formation of the cooling channels (2),
in order to manufacture the depressions (6) in the combustion chamber wall (3), holes or milled-out areas are introduced which run along a respective longitudinal axis (7) and in the area of the longitudinal axis (7), transversely with respect to the flow direction and transversely with respect to the longitudinal axis (7).

12. Method according to Claim 11,
**characterized in that**
the combustion chamber wall (3) has a first layer (4) and a second layer (5), wherein the first layer (4) is produced first, and the cooling channels (2) and the depressions (6) are introduced in the first layer (4), and the second layer (5) is then produced.

13. Method according to Claim 11,
**characterized in that**
the cooling channels (2) are formed by means of a milling tool along the respective longitudinal axis (7), wherein the opposite web walls (10) which are formed in this way are at the same distance from the longitudinal axis (7), along said longitudinal axis (7).

14. Method according to Claim 11,
**characterized in that**
in order to manufacture a depression (6), the drilling axis (14) of a drill or milling tool is arranged on the longitudinal axis (7) of the cooling channel (2) during drilling.

15. Method according to one of Claims 11 to 14,
**characterized in that**
the diameter (2r) of the drill or milling tool is chosen to be greater than the width (b) of the cooling channel (2).

16. Method according to Claim 11 or 13,
**characterized in that**
the drilling axis of a drill or milling tool is arranged offset by an offset distance (d) laterally with respect to the longitudinal axis (7) when drilling a depression (6).

17. Method according to Claim 16,
**characterized in that**
the radius (r) of the drill or milling tool is chosen to be less than the distance between a web wall (10) and the longitudinal axis (7) plus the offset distance (d).

18. Method according to Claim 16 or 17,
**characterized in that**
the drilling axis (14) of the drill or milling tool along the longitudinal axis (7) changes, after a first number of holes on one side of the longitudinal axis (7), to the other side of the longitudinal axis (7), in order to produce a second number of holes.

19. Method according to one of Claims 11 to 18,
**characterized in that**
the holes along the longitudinal axis (7) are produced with different drill or milling tool diameters.

20. Method according to one of Claims 11 to 19,
**characterized in that**
the depth (tv) of the hole is chosen to be less than or equal to the height of the web walls (10), which is governed by the depth (t) of a cooling channel (2).

21. Method according to one of Claims 11 to 20,
**characterized in that**
the number of holes per length unit is increased upstream along a respective longitudinal axis (7).

## Revendications

1. Chambre de combustion (1) pour un moteur de fusée destiné à l'éjection d'un écoulement de gaz chaud, la chambre de combustion (1) présentant une paroi de chambre de combustion (3) à l'intérieur de laquelle sont disposés des canaux de refroidissement (2) pour le passage d'un fluide de refroidissement, les canaux de refroidissement (2) possédant un axe longitudinal (7), une direction en profondeur (t) et une section transversale essentiellement rectangulaire et au moins une partie des canaux de refroidissement (2) présentant des renfoncements (6) qui permettent d'éviter une stratification du fluide de refroidissement dans les canaux de refroidissement (2), et
qui sont disposés à chaque fois transversalement à la direction d'écoulement et transversalement à l'axe longitudinal (7) dans la direction de profondeur (t) des canaux de refroidissement (2), **caractérisée en ce que**
la section transversale des renfoncements (6) est réalisée en forme de segment circulaire, dont le rayon (r) est supérieur ou égal à la profondeur (tᵥ) des renfoncements (6).

2. Chambre de combustion selon la revendication 1,
**caractérisée en ce que**
la paroi de la chambre de combustion (3) présente une première couche (4) et une deuxième couche (5).

3. Chambre de combustion selon la revendication 2,
**caractérisée en ce que**
la première couche est une couche interne (4) tournée vers un espace interne de la chambre de combustion et la deuxième couche est une couche extérieure (5) de la paroi de la chambre de combustion (3) et
les canaux de refroidissement (2) sont disposés dans le côté de la couche interne (4) tourné vers la couche extérieure (5).

4. Chambre de combustion selon la revendication 3,
**caractérisée en ce que**
les renfoncements (6) s'étendent depuis le côté de la couche interne (4) tourné vers la couche extérieure (5) dans la couche interne (4).

5. Chambre de combustion selon la revendication 1,
**caractérisée en ce que**
les renfoncements (6) sont prévus sur des parois de nervures (10) des canaux de refroidissement (2).

6. Chambre de combustion selon la revendication 1 ou 5,
**caractérisée en ce que**
les renfoncements (6) sont réalisés de manière symétrique par rapport à l'axe longitudinal (7) dans les parois de nervures opposées (10).

7. Chambre de combustion selon la revendication 1 ou 5,
**caractérisée en ce que**
les renfoncements (6) sont réalisés de manière décalée les uns par rapport aux autres dans la direction de l'axe longitudinal (7) sur les parois de nervures opposées (10).

8. Chambre de combustion selon l'une quelconque des revendications 2 à 7, **caractérisée en ce que** les parois de nervures (10) d'un canal de refroidissement (2) s'étendent depuis la première couche (4) jusqu'à la deuxième couche (5), la profondeur (tᵥ) des renfoncements (6) correspondant au maximum à la hauteur des parois de nervures (10) déterminée par la profondeur (t) d'un canal de refroidissement (2).

9. Chambre de combustion selon l'une quelconque des revendications précédentes,
**caractérisée en ce que**
les canaux de refroidissement (2) présentent le long de leur axe longitudinal (7) des régions ayant une densité différente du nombre de renfoncements (6).

10. Chambre de combustion selon l'une quelconque des revendications précédentes,
**caractérisée en ce que**
la chambre de combustion (1) présente, à une première extrémité, une tête d'injection (12) et à une extrémité opposée à la première extrémité, un col de chambre de combustion (13) servant d'ouverture de sortie pour l'écoulement de gaz et en amont dans la région du col de la chambre de combustion (13) est prévue une plus faible densité du nombre des renfoncements (6).

11. Procédé de fabrication d'une chambre de combustion (1), selon l'une quelconque des revendications précédentes, dans lequel des canaux de refroidissement (2) sont réalisés avec une section transversale essentiellement rectangulaire à l'intérieur de la paroi de la chambre de combustion (3),
**caractérisé en ce que**
avant la réalisation des canaux de refroidissement (2)
pour la fabrication des renfoncements (6) dans la paroi de la chambre de combustion (3), des perçages ou des fraisages sont pratiqués le long d'un axe longitudinal respectif (7) et s'étendant dans la région de l'axe longitudinal (7) transversalement au sens de l'écoulement et transversalement à l'axe longitudinal (7).

12. Procédé selon la revendication 11,
**caractérisé en ce que**
la paroi de la chambre de combustion (3) est réalisée avec une première (4) et une deuxième couche (5), la première couche (4) étant d'abord fabriquée et les canaux de refroidissement (2) et les renfoncements (6) étant pratiqués dans la première couche (4) puis, la deuxième couche (5) étant fabriquée.

13. Procédé selon la revendication 11,
**caractérisé en ce que**
la réalisation des canaux de refroidissement (2) s'effectue au moyen d'un outil de fraisage le long de l'axe longitudinal respectif (7), les parois de nervures (10) opposées ainsi formées présentant le long de l'axe longitudinal (7) une distance égale par rapport à celui-ci.

14. Procédé selon la revendication 11,
**caractérisé en ce que**
pour la fabrication d'un renfoncement (6), l'axe de perçage (14) d'une perceuse ou d'une fraiseuse est disposé lors du perçage sur l'axe longitudinal (7) du canal de refroidissement (2).

15. Procédé selon l'une quelconque des revendications 11 à 14,
**caractérisé en ce que**
le diamètre (2r) de la perceuse ou de la fraiseuse est supérieur à la largeur (b) du canal de refroidissement (2).

16. Procédé selon l'une quelconque des revendications 11 à 13,
**caractérisé en ce que**
l'axe de perçage d'une perceuse ou d'une fraiseuse lors du perçage d'un renfoncement (6) est disposé latéralement par rapport à l'axe longitudinal (7) de manière décalée d'une distance de décalage (d).

17. Procédé selon la revendication 16,
**caractérisé en ce que**
le rayon (r) de la perceuse ou de la fraiseuse est plus petit que la distance d'une paroi de nervure (10) à l'axe longitudinal (7) plus la distance de décalage (d).

18. Procédé selon la revendication 16 ou 17,
**caractérisé en ce que**
l'axe de perçage (14) de la perceuse ou de la fraiseuse le long de l'axe longitudinal (7) change après un premier nombre de perçage, d'un côté de l'axe longitudinal (7) à l'autre côté de l'axe longitudinal (7), afin d'effectuer un deuxième nombre de perçages.

19. Procédé selon l'une quelconque des revendications 11 à 18,
**caractérisé en ce que**
les perçages sont effectués le long de l'axe longitudinal (7) avec des diamètres de perçage ou de fraisage différents.

20. Procédé selon l'une quelconque des revendications 11 à 19,
**caractérisé en ce que**
la profondeur (tᵥ) du perçage est inférieure ou égale à la hauteur des parois de nervures (10) déterminée par la profondeur (t) d'un canal de refroidissement (2).

21. Procédé selon l'une quelconque des revendications 11 à 20,
**caractérisé en ce que**
le nombre des perçages augmente vers l'amont, le long d'un axe longitudinal respectif (7) par unité de longueur.
